# EUROPEAN PATENT SPECIFICATION

(11) **EP 2 087 989 B1**
(45) Date of publication and mention of the grant of the patent: **19.07.2017**
(21) Application number: 09152036.1
(22) Date of filing: 04.02.2009
(51) Int. Cl.: B29C 65/14, B29C 65/16

(54) **Method for welding thermoplastic resin articles**
Verfahren zum Schweißen von Gegenständen aus thermoplastischen Kunststoffen
Procédé pour la soudure d'articles en résine thermoplastique

(30) Priority: 05.02.2008 JP 2008024716; 10.07.2008 JP 2008179709
(43) Date of publication of application: 12.08.2009
(73) Proprietor: Campus Create Co., Ltd., Tokyo 158-0083 (JP)
(72) Inventor: Kurosaki, Yasuo, Kanagawa 223-0061 (JP); Satoh, Kimitoshi, Kanagawa 215-0024 (JP)
(74) Representative: Grosse Schumacher Knauer von Hirschhausen

(56) References cited:
- EP-A1- 1 405 713
- EP-A1- 1 440 784
- EP-A1- 1 508 428
- WO-A2-00/66345
- GB-A- 2 397 045
- JP-A- 63 151 431
- JP-A- 2004 142 225
- JP-A- 2006 315 312
- JP-A- 2006 315 313
- BAYLIS B; HUANG Y P; WATT D: "WELDING THERMOPLASTIC ELATROMERS TO POLYPROPYLENE WITH A DIODE LASER", PROCEEDINGS OF ICALEO, XX, XX, 1 January 2002 (2002-01-01), XP009046528,

## Description

The present invention relates to improved method for welding thermoplastic resin articles, and more particularly relates to improvement in a method for welding thermoplastic resin articles via irradiation of infrared beam.

For welding of thermoplastic resin articles, ultrasonic welding and high frequency welding have been known generally and used in practice.

In the case of ultrasonic welding, ultrasonic energy generated by ultrasonic oscillator is converted into friction heat due to mechanical vibration of a welding surface and the vicinity of the welding surface selectively generates heat for welding. In the case when the welding material is a soft resin, however, ultrasonic energy is much attenuated before arrival at the welding surface and, thereby, welding cannot be carried out easily in most cases.

In the case of high frequency welding, a resin film sandwiched between a metallic high frequency die and a support is instantly molded via dielectric loss in an alternate electric field to which high frequency is applied. In this case, the high frequency die is a metal having high thermal conductivity, heat on the thermoplastic film surface is effectively removed to keep the film surface at a low temperature and welding with small change in the surface configuration can be carried out. This process, however, is in most cases unsuited for welding of low dielectric loss resin such as polyethylene resins, polypropylene resins, polystyrene resins, polyester resins and fluorine resins.

Infrared transparent welding has been proposed as a substitute for these processes. In the case of this process, infrared is used for irradiation source, two or more thermoplastic resin articles and an infrared transparent solid made of an amorphous material are superimposed to form a superimposed body and infrared beam is irradiated to the superimposed body from the side of the infrared transparent solid, e. g. JP 61 151431 A, WO 00/66345 A2 or Baylis et al. (2002; Proc. Icaleo, XP009046528).

In the case of conventional infrared transparent welding, however, CO₂ laser of 10 µm band has been used for the irradiation source but such irradiation source is unsuited for good welding of thick poly olefin resins (PE and PP) and poly-fluoride hydro carbon resins (PFA, PTF, etc.).

Thermoplastic resin articles generally present high absorption for infrared beams of 2 µm wavelengths and high transparency for wavelength lower than that. As a consequence, inorganic pigments such as carbon black or an organic colors of cyanine typed is added in order to increase absorption.

When an infrared beam is irradiated in such a case, thermoplastic resin articles absorb laser energy through the irradiated surface layer. The energy is attenuated in the internal regions of the superimposed body of thermoplastic resin articles. That is to say, it is necessary to raise the temperature of the infrared irradiating surface layer higher than the temperature of the interface temperature of the thermoplastic articles but this high temperature significantly degrades the surface configuration of the infrared irradiated surface of the thermoplastic article after welding due to melting deformation

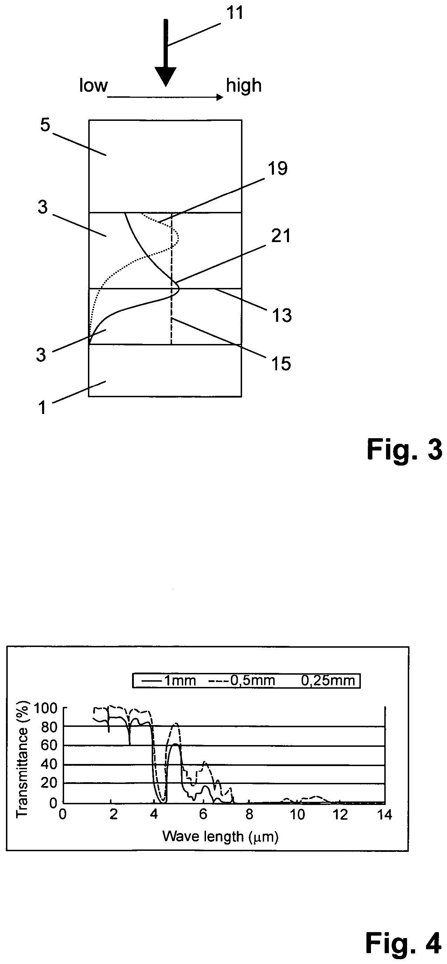

For improvement of such defects, the invention of the patent application JP 2003-541714 was proposed by the applicant of this application. This conventional art has a construction such as shown in Fig. 4.

In this arrangement, a superimposed body against the infrared irradiation source 9 is formed by superimposition of infrared transparent solid 5, the first and second thermoplastic articles 3 and the support 1 and the superimposed body is compressed in the direction 7.

Temperature rise accompanying high infrared absorption in the infrared irradiating side surface ' layer of the first layer of the thermoplastic resin articles 3 is suppressed through high heat discharge to the infrared transparent solid 5 and high temperature region is developed near the interface between the thermoplastic articles 3. This maintains good surface configuration in the infrared irradiating side surface layer and interface welding can be performed within a very short time.

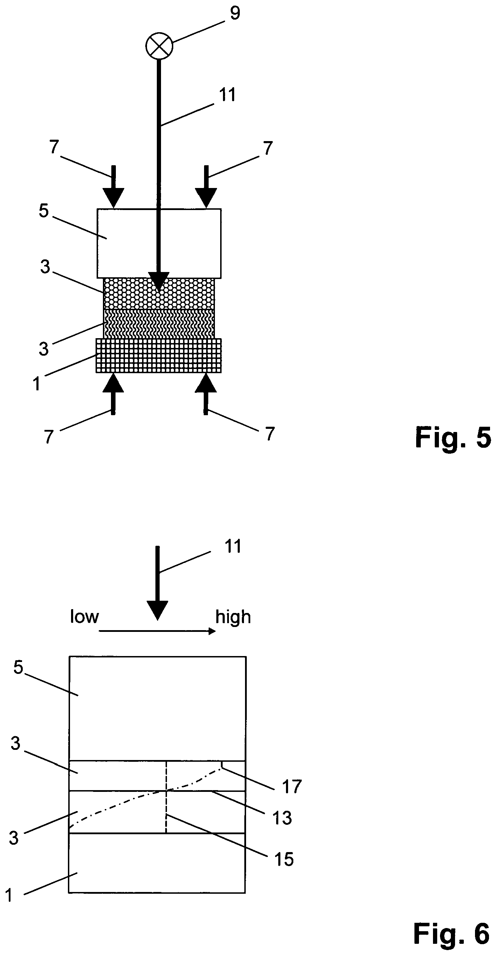

Fig. 6 depicts the temperature distribution 17 of the thermoplastic articles when CO₂ laser is used for the irradiation source of the infrared laser. As is clear from the illustration, when thermoplastic articles present high absorption for the irradiated infrared, the highest temperature region of thermoplastic remains at the place of contact of the infrared transparent solid 5 with the infrared irradiating side of the thermoplastic articles 3 as shown in Fig. 6. So, in welding of a thick thermoplastic article it is necessary to escalate the temperature of the infrared irradiating side surface of the thermoplastic articles in order to raise the interface of the thermoplastic articles to the temperature necessary for welding, and this causes degradation of the surface configuration.

JP 2006-315313 discloses a joining method capable of simply obtaining a good joining interface containing no air bubbles and at low cost. A first and a second member are brought into contact. Both members are then placed between molds, which exert pressure on the members. The contact surface is then irradiated by an infrared irradiation means.

JP 2004-142225 discloses a method for fusing sheet material. A heat-fusible sheet material and a sheet material as a fusion member to be bonded to the sheet material are set between a light-permeable member that permeates a laser beam and a heat generating member which generates heat by being irradiated with the laser beam. Thus, the sheet materials are fused together.

EP 1 405 713 A1 discloses a method and a device for joining work pieces made of plastic in three-dimensional form using a laser beam. Two work pieces are placed on top of each other. The upper piece is permeable for laser light. Then laser light is irradiated on to the work pieces and the interface surfaces are melted. While cooling down, the work pieces are fused under pressure. The laser light is guided to selectively heat the interface surfaces to be welded.

GB 2 397 045 A discloses a process for welding of thermoplastic resin films. The film welding is achieved by controlling the surface temperature of a thermoplastic resin casting on the infrared incident side at or lower than the softening temperature of the thermoplastic resin used for processing.

### Summary of the invention

It is one object of the present invention to provide infrared welding which assures good welding effects even in the case of thick poly olefin resins (PE and PP) and poly-fluoride hydro carbon resins (PFA, PTF, etc.).

It is another object of the present invention to avoid degradation of the surface configuration through thermal damages in the first surface layer of the superimposed body of the thermoplastic articles by infrared irradiation.

In accordance with one concept of the present invention, a support is provided, two or more thermoplastic resin articles are superimposed on the support, an infrared transparent solid is further superimposed to form a superimpose body, and an infrared beam is irradiated to the superimposed body from an irradiation source. The support has an infrared irradiated side surface made of a rubber buffer layer.

The plurality of thermoplastic articles are superimposed against a support, an infrared transparent solid is superimposed to form a superimposed body and infrared is irradiated to the superimposed body from the side of the infrared transparent solid, whereby the transparent solid is made of a crystal material. For the irradiation source, an Er: YAG laser or fiber laser is used. The interface temperature of the thermoplastic article becomes relatively lower and a high temperature region can be developed within the superimposed body due to the infiltration of laser energy. As a result, degradation of the surface configuration due to thermal damages in the infrared irradiation side surface layer of the thermoplastic articles can be suppressed.

Preferably, the crystal material is chosen from zinc, selenide, zinc sulphate, silicon, germanium, sapphire or arsenic gallium.

In one preferred embodiment, a CO laser is used for the irradiation source.

The interface temperature of the thermoplastic resin articles in contact with infrared transparent solid becomes relatively high and higher temperature internal region is developed due to transmitted infrared energy. As a result, degradation of the surface configuration due to thermal damages on the infrared irradiating side surface of the thermoplastic resin articles is controlled and a welding layer can be developed with short time heating and cooling.

### Description of the accompanying drawings

Fig. 1 is a schematic side view of the basic construction of the system for implementation of the welding process in accordance with the present invention.
Fig. 2 is a schematic side view of the temperature distribution inside thermoplastic resin articles during welding in accordance with the present invention.
Fig. 3 is a schematic side view of the temperature distribution when thick thermoplastic resin articles are molded with temperature control.
Fig. 4 is a parallel light transparent spectrum of PFA.
Fig.5 is a schematic cross sectional view of the internal construction of the thermoplastic articles superimposed body.
Fig.6 is a graph showing the temperature distribution inside the superimposed body when the conventional irradiation source is used.
Fig.7 is a graph showing temperature distribution inside the superimposed body when the conventional and present invention sources are used.
Fig.8 is a graph showing relationship between infrared wavelength and transparency of poly carbonate (PC).
Fig.9 is a graph showing relationship between wavelength and transparency of polyamide (PA).

### Description of the preferred embodiments

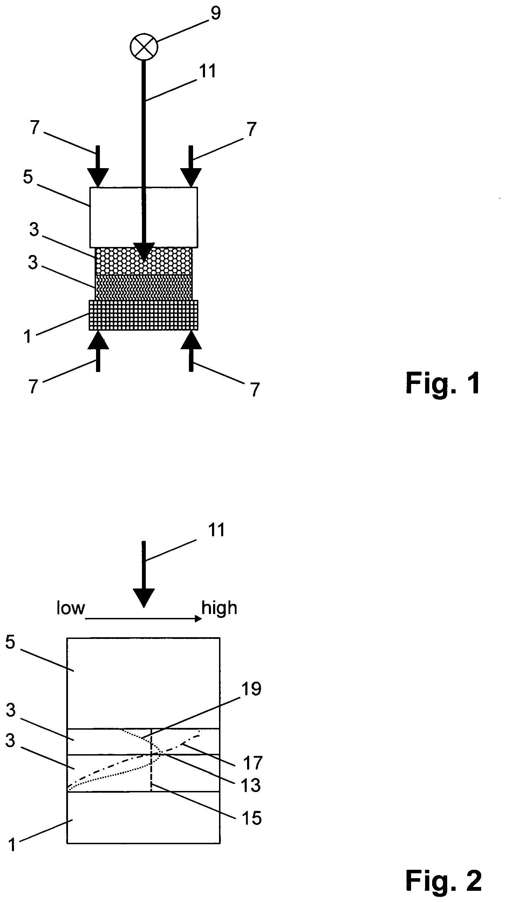

The basic construction of the system for implementation of the welding method in accordance with the present invention is shown in Fig. 1. Two thermoplastic resin articles 3 are superimposed in contact with a support 1 and an infrared transparent solid 5 is superimposed as a heat sink to the side of the thermoplastic resin articles 1 opposite to the support 1 to form a superimposed body. The superimposed body is compressed as shown with an arrow for pressure contact of the elements, 3 and 5. Infrared beam 11 is irradiated to the superimposed body from the side of the infrared transparent solid 5 from a CO laser irradiation source 9.

The support 1 used for the present invention is expected to maintain stable contact of the infrared transparent solid 5, the thermoplastic resin articles 3 and the molting surfaces. Any materials of any configurations can be used for the support 1 as long as it has such a function. For example, metallic blocks and plates of aluminum, aluminum alloys and copper alloys with little plastic deformation by application of compression, and moderate hardness.

Further, the support 1 has an infrared irradiating side surface made of a rubber buffer layer. There are cases in which defects such as voids, breakages and significant shrinkages develop in the welding region due to insufficient physical contact (contact surface area and pressure) between the infrared transparent solid 5, thermoplastic resin articles 3 and welding surfaces. In such cases, presence of the rubber buffer layer on the infrared irradiating side surface of the support 1 improves physical contact between the infrared transparent solid, 5, thermoplastic resin articles 3 and the welding surfaces and suppresses development of defects such a voids, breakages and significant shrinkages after welding.

The infrared transparent solid 5 is made of infrared crystal materials having a thermal conductivity of 15 w/ m • K or higher such as zinc selenide ( ZnSe ), zinc sulphate ( Zns ), silicon ( Si ), germanium (Ge), sapphire (Al₂O₃) and arsenic galium (GaAs).

The thermoplastic resin articles suited for infrared welding in accordance with the present invention includes thermoplastic resin articles difficult to be molded by the conventional welding processes, i.e. thermoplastic articles unsuited for high frequency welding and ultrasonic welding due to low dielectric loss and softness and thermoplastic articles with low dielectric loss in high frequency band and high in melting point. Such thermoplastic articles include olefin type thermoplastic elastomers as the former and fluorine type resins and liquid crystal polymers as the latter.

Fig.2 shows the internal temperature distributions of the thermoplastic resin casings. As is clear from the illustration, the temperature distribution is highest at the interface between the infrared transparent solid 5 and the thermoplastic resin articles 3. As a result, surface degradation by thermal damage to occur.

When CO laser is used for infrared irradiation source, the temperature distribution assumes low value at the interface between the infrared transparent solid 5 and the thermoplastic resin articles 3 and the highest value at the interface of the both thermoplastic resin casings (weldings surface). That is, a high temperature internal region can be developed due to transmitted infrared energy.

As a result, while surface degradation such as significant shrinkages, breakages, and thermal decomposition is much suppressed, welding layer with short time heating and cooling can be obtained. In the illustration, the melting temperature of the welding surface is indicated with 15.

When the thermoplastic resin articles 3 on the infrared irradiation side is thick as shown in Fig. 3, the internal temperature distribution remains near the interface between the infrared transparent solid 5 and the thermoplastic resin articles 3. So, when the welding surface 13 should be escalated to the necessary temperature, the surface temperature of the thermoplastic resin articles 3 exceeds the temperature of the welding surface, thereby causing surface degradation due to thermal damages.

So, the wavelength of the CO laser is set to 5 µ band. As a result, the temperature distribution in the thermoplastic resin articles assumes the condition shown with a solid line in the illustration, a high temperature region is developed inside near the welding surface 13 and welding of a thick thermoplastic resin article surface layer becomes possible.

Fig.4 shows the parallel light transparent spectrum of tetra-fluoride per-floro alkyl vinyl ether copolymer resin (PFA). AS depicted, the spectrum is very low in the region of 10.6 µ m which is the wavelength of CO2 laser. As a result, when thick thermoplastic articles are superimposed, infiltration of infrared energy is small and the temperature of the welding surface is difficult to rise. However, the infiltration at 5 *µ* m is more significant than 10.6 *µ*m and moderate absorption is presented. Since the CO laser has a oscillation wavelength in this 5 *µ* m band, infrared infiltration into deep region of the thermoplastic articles can be assured. This invention can broadly utilized in welding of thermoplastic resin articles.

The interface temperature of the thermoplastic resin article in contact with infrared transparent solid lowers relatively, high temperature region can be developed within the superimposed body by the transmitted energy. AS a result, surface degradation caused by thermal damages on the infrared irradiated surface of the thermoplastic resin article.

As shown with an arrow 7, the superimposed body is compressed to make close contact with the elements 1, 3 and 5 forming the superimposed body. Next, the superimposed body is irradiated with infrared beam from a source on the infrared transparent solid 5.

In the present invention, the support 1 is used for maintaining stable contact of the infrared transparent solid 5, the thermoplastic resin article 3 and welding thermoplastic resin. A support 1 of any configuration and materials can be employed as long as the function is developed. For example, a metallic block or plate of steel, aluminum alloys and cupper alloys, which develop little plastic deformation and have proper rigidity, can be employed.

Further, the support 1 may be provided with a rubber buffer layer on the infrared irradiated surface. There is a case which develops defects such a s significant shrinkage when the thermoplastic resin articles 3 are in sufficient physical contact. In such a case, the physical contact is improved by use of the rubber buffer for the infrared irradiated surface of the support 1. This suppresses development of defects such as void breakage and significang shrinkage.

For the infrared transparent solid 5, zinc solenoid (Znse), zinc sulphate (Zns), silicon (Si), germanium (Ge), saphire (Al₂O₃) and arsenic kalium, which have thermal conductivity of 15 w/m • k or higher, can be used.

The thermoplastic resin articles suited for welding of the present invention includes thermoplastic resins unsuited for the conventional welding. They are thermoplastic resin articles which are low in dielectric loss in high frequency region and soft. They are unsuited for high frequency ultra sonic weldings. For example, olefin type thermoplastic elastomers, fluoride resins, liquid crystal polymers, poly carbonate and polyamides.

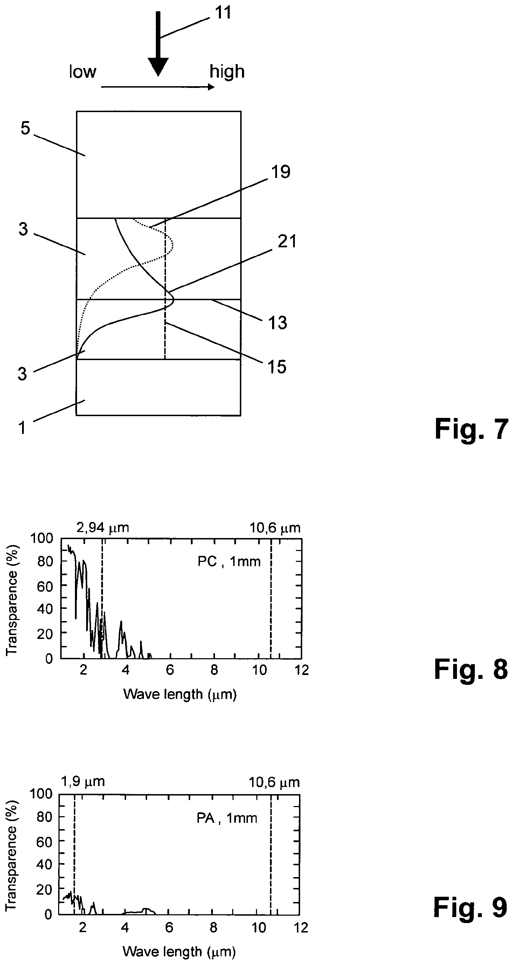

Fig.7 depicts the thermoplastic distributions in the superimposed body when conventional CO2 laser is used and the irradiation source of the present invention. As is clear from the illustration, the temperature distribution in highest near the interface 13 of the thermoplastic resin article when the present invention is followed and becomes much lower on the infrared irradiated surface of the thermoplastic resin article.

That is, surface degradation by thermal damages on said surface can be avoids.

Fig.8 depicts the relationship between infrared wavelength and transparency of poly carbonate. As is clear from illustration, poly carbonate is very low in infrared transparency in 10.6 *µ* m band which is the wavelength of CO₂. laser.

When thick in configuration, infiltration of infrared energy into the superimposed body is small and the temperature at the thermoplastic resin article surface does not rise. In addition, infiltration in 3 *µ* m band is by far larger than the case of 10.6 *µ* m. Moderate adsorption ois also exhibited. In the case of Er: YG laser employed by the present invention, oscillating wavelength is present near 3 *µ* m band. Infrared energy infiltration into the superimposed body can be maintained. This raised the temperature of the thermoplastic resin article border.

Fig. 9 depicts the relationship between infrared wavelength and transparency of polyamide (PA). As is clear from the illustration, polyamide is very low in infrared transparency in 10.6 µ m band which is the wavelength of CO₂ laser. So, when a thick configuration is employed, infiltration of infrared energy into the superimposed body is small and the temperature of the thermoplastic resin article is hard to rise. However, infiltration in 2 µ m band is much larger than 10. 6 V and inordinate adsorption is also presented. In the case of the fiber laser employed by the present invention, the oscillating wavelength is near 2 V and infiltration of infrared energy into the superimposed body is maintained and the interface temperature of the thermoplastic resin article can be made higher.

This can be broadly utilized in welding of thermoplastic resin article.

## Claims

1. Method for welding thermoplastic resin articles (3) comprising:
providing a support (1) with an infrared irradiated side surface made of a rubber buffer layer, superimposing two or more thermoplastic resin articles (3) on said support (1),
further superimposing an infrared transparent solid (5) to form a superimposed body and irradiating infrared beam (11) to said superimposed body from an irradiation source (9),
the infrared transparent solid (5) is made of an infrared crystal material having a thermal conductivity of 15 W/m*k or higher,
**characterized in that**
the irradiation source (9) is a CO laser source irradiating an infrared beam (11) having an oscillation wavelength in 5 µm band.

2. Method as claimed in claim 1 in which said infrared crystal material is chosen from zinc selenide, zinc sulphate, silicon, germanium, sapphire or arsenic gallium.

## Patentansprüche

1. Verfahren zum Schweißen von aus thermoplastischem Harz bestehenden Artikeln (3), umfassend:
Vorsehen eines Trägers (1) mit einer infrarot-bestrahlten Seitenfläche, die aus einer Gummi-Pufferschicht besteht,
zwei oder mehr aus thermoplastischem Harz bestehende Artikel (3) werden auf diesem Träger (1) überlagert angeordnet,
weiter wird ein infrarotdurchlässiger Festkörper (5) überlagert angeordnet, um einen überlagert angeordneten Körper zu bilden, und es wird ein Infrarot-Strahl (11) auf den überlagert angeordneten Körper von einer Bestrahlungsquelle (9) aufgestrahlt, wobei der infrarotdurchlässige Festkörper (5) aus einem Infrarot-Kristallmaterial besteht, das eine Wärmeleitfähigkeit von 15 W/m·k oder mehr aufweist,
**dadurch gekennzeichnet, dass**
die Bestrahlungsquelle (9) eine CO-Laserquelle ist, die einen Infrarotstrahl (11) aufstrahlt, der eine Schwingungswellenlänge im 5-µm-Band aufweist.

2. Verfahren nach Anspruch 1, wobei das Infrarot-Kristallmaterial gewählt ist aus Zinkselenid, Zinksulfat, Silicium, Germanium, Saphir oder Arsen-Gallium.

## Revendications

1. Procédé pour la soudure d'articles en résine thermoplastique (3) comprenant :
la fourniture d'un support (1) avec une surface latérale irradiée par infrarouges constituée d'une couche tampon en caoutchouc,
la superposition d'au moins deux articles en résine thermoplastique (3) sur ledit support (1),
la superposition en outre d'un solide transparent aux infrarouges (5) pour former un corps superposé, et
l'irradiation d'un faisceau infrarouge (11) sur ledit corps superposé à partir d'une source d'irradiation (9),
le solide transparent aux infrarouges (5) étant constitué d'un matériau à cristaux infrarouges présentant une conductivité thermique supérieure ou égale à 15 W/m*k,
**caractérisé en ce que**
la source d'irradiation (9) est une source laser CO irradiant un faisceau infrarouge (11) présentant une longueur d'onde d'oscillation dans une bande de 5 µm.

2. Procédé selon la revendication 1, dans lequel ledit matériau à cristaux infrarouges est choisi parmi du séléniure de zinc, du sulfate de zinc, du silicium, du germanium, du saphir ou de l'arsenic gallium.
